# EUROPEAN PATENT APPLICATION

(11) **EP 3 517 775 A1**
(43) Date of publication of application: **31.07.2019**
(21) Application number: 18153948.7
(22) Date of filing: 29.01.2018
(51) Int. Cl.: F03D 80/10, F21V 8/00

(54) **LIGHT GUIDE ASSEMBLY AND METHOD FOR PROVIDING A TOWER THEREWITH**

(71) Applicant: Siemens Gamesa Renewable Energy A/S, 7330 Brande (DK)
(72) Inventor: Deé, Jan-Willem, 3125 AT Schiedam (NL); Roskam, Roelf Albert, 3125 AT Schiedam (NL)
(74) Representative: Aspacher, Karl-Georg

(57) **Abstract**

Light guide assembly for a tower, in particular for a wind turbine tower, comprising a light guide casing arranged to extend substantially through a tower wall, wherein a first end of the light guide casing is provided with a light source, and a second end of the light guide casing is configured for emitting light to an area surrounding the tower.

## Description

The invention relates to a light guide assembly for a tower, in particular for a wind turbine tower.

Towers are generally equipped with a light warning signal on top of the tower, for example to indicate the tower's height to air traffic at relatively low altitude, such as for example helicopters, which is especially useful with reduced visibility and/or at night. However, in case of wind turbine towers, the tower itself may not be the highest point, as revolving blades can also extend above the wind turbine tower. In order to indicate the maximal height of revolving wind turbine blades, wind turbine towers can be provided with one or more warning lights along the tower wall for example more or less at a minimal height until where a wind turbine blade tip may reach.

Such systems are generally known from prior art. Some of the prior art light systems can be fixed on an outer wall of the tower. However, when a light emitting element, or any other component, in such a light system fails and needs replacement, it may be a relatively difficult and costly operation, as the light system needs to be approached from an outer side of the tower. In case of wind turbine towers on land, cranes may be used, but in case of off-shore wind turbine towers, dedicated climbers and/or climbing equipment is required, which is relatively dangerous and risky work and raises maintenance costs. Also, due to the environmental circumstances offshore, it is often not possible to approach the wind turbine tower from the outside. Therefore, alternative solutions have been developed to enable maintenance work to be done from an inside of the tower. In these prior art solutions, lighting means, including light emitting and light directing elements, can be inserted through a hole in a tower wall from the inside outwardly such that the lighting means extend enough from the outer side of the tower wall to illuminate surroundings of the tower, while being connected with a power supply inside the tower, allowing maintenance work to be done from inside the tower. However, it has turned out that adjustment and/or alignment of the optical system of such lighting means is relatively difficult.

It is an aim of the present invention to solve or alleviate one or more of the above-mentioned problems. Particularly, the invention aims at providing a more efficient tower light assembly allowing maintenance to be done from inside the tower while facilitating adjustment of the optical system in the tower light assembly.

To this aim, according to a first aspect of the present invention, there is provided a light guide assembly for a tower, in particular for a wind turbine tower according to claim 1. In particular, the light guide assembly comprises a light guide casing arranged to extend substantially through a tower wall. A first end of the light guide casing is configured for receiving a light source, and a second end of the light guide casing is configured for emitting light to an area surrounding the tower. Said light guide casing is a rigid light guide casing arranged for being inserted into a hole in the tower wall such that, after insertion, the first end is substantially at an inner side of the tower wall and the second end is substantially at an outer side of the tower wall. In this way, even if the second end of the light guide casing extends outwardly from the tower wall, the light source is at an inner side of the tower, providing ease of maintenance and easy accessibility.

In a preferred embodiment of the invention, one end of said casing can be provided with a flange. The casing is preferably a rigid casing, made of steel, e.g. stainless steel, or any other rigid material, to provide for strength and stiffness. The flange can provide a retention element to keep the light guide casing in place with respect to the tower wall so that the second end of the light guide casing always extends sufficiently from the outer tower wall, thus ensuring good visibility of the emitted light in the surroundings of the tower.

The second end of the light guide casing can typically be provided with a transparent dome covering the light exit surface. The dome can provide a protection of the light exit surface against external elements, such as rain, wind, etc. The dome can be made transparent to for example visible light, and/or also to other wavelengths, such as to infrared light.

The light guide assembly can preferably comprise a sealing ring arranged to provide a sealing engagement between the hole and the light guide casing, preferably between the hole and the casing. Such a sealing ring, which can typically be made of for example silicone, can protect the light guide casing, as well as the hole in the tower wall against infiltration of water and/or dirt from for example rain. Additionally, the sealing ring can be arranged to be expandable, for example through compression, such that the expanded sealing ring can keep the light guide casing in place within the hole in the tower wall. Depending for example on a tower wall thickness, the light guide casing assembly can comprise more than one sealing ring.

The light guide assembly can advantageously comprise a compressing member arranged to enclose the light guide casing and to compress the sealing ring from the inner side of the tower wall. The compressing member is preferably a relatively rigid sleeve that can deform the sealing ring by compressing the sealing ring to fixate the light guide casing in the hole of the tower wall.

Preferably, the light guide assembly can comprise a tightening element arranged to fixate the light guide casing from the inner side of the tower wall. The tightening element can for example be a nut which can be screwed on for example the casing, or can be any other tightening element, as will be clear to the person skilled in the art. The tightening element allows fixation of the light guide casing within the hole in the tower wall such that the light guide casing cannot be moved and/or pushed in- and/or outwardly, which might expose or hide the second end of the light guide casing too much. At the same time, fixation from the inside of the tower is advantageous as access is easier than to an outer side of the tower wall.

The light guide assembly can preferably comprise a light source, which light source emits light that can enter a light guide to be arranged in the light guide casing. The light source can be a single light emitting element, or may be a plurality of light emitting elements, positioned for example in an array of light emitting elements or in a polygonal shape of light emitting elements or any other pattern of light emitting elements. The light emitting element can be for example a light emitting diode, preferably arranged on a printed circuit board, or other carrier, wherein the light source is arranged to be mounted near the light entry surface of the light guide. More advantageously, the first end of the light guide casing is spaced-apart from the second end of the light guide casing at a distance corresponding to substantially a tower wall thickness, for example at a distance of at least 5 cm.

The light guide assembly can preferably comprise a housing, for example a box shaped housing, enclosing the light source and/or a first end of the light guide casing, wherein said box housing is arranged to be mounted on the first end of the light guide casing, the first end of the light guide casing preferably extending into the box shaped housing. The housing can provide protection of a light source, as for example a LED on a printed circuit board. The housing can for example be screwed or clamped on the first end of the light guide casing, or fixated thereon in any other way known to the person skilled in the art. At least one wall of the housing can be thickened such that the first end of the light guide casing reaching through said thickened wall is provided with additional support, improving stability of the light guide casing.

The light guide assembly can typically comprise a power supply which is connectable to the light source. The power supply can for example be spaced-apart from a light source, wherein the power supply is preferably also located inside the tower. In case of a LED, the power supply can include a voltage convertor for LED and a control unit arranged to control the functioning of the LED. Said control unit can also be integrated on the printed circuit board on which the LED is fixed. The power supply can for example be connected with the light source via the housing containing the light source. In case a problem arises with the power supply, the power supply can be reached relatively easily from within the tower. There can be one power supply per light source, which may optionally also be integrated within the housing containing the light source, providing a light guide assembly which can be made entirely ready for use prior to installation, only needing insertion and fixation on site. Alternatively, a single power supply can also be arranged to supply power to a plurality of light sources within the same tower.
An aspect of the invention provides a tower, in particular a wind turbine tower, provided with at least one light guide assembly as described above, leading to one or more of the above-mentioned advantages.

Yet another aspect of the invention provides a method for providing a tower, in particular a wind turbine tower, with at least one light guide assembly, preferably a light guide assembly as described above. The method can lead to one or more of the above-mentioned advantages.

The present invention will be further elucidated with reference to figures of exemplary embodiments. Corresponding elements are designated with corresponding reference signs.
Figure 1 shows a schematic side view of a wind turbine provided with a row of light guide assemblies according to a first aspect of the invention;
Figure 2 shows a schematic cross-section of a first embodiment of a light guide assembly according to a first aspect of the invention;
Figure 3 shows a perspective view on a second embodiment of a light guide assembly according to a first aspect of the invention.

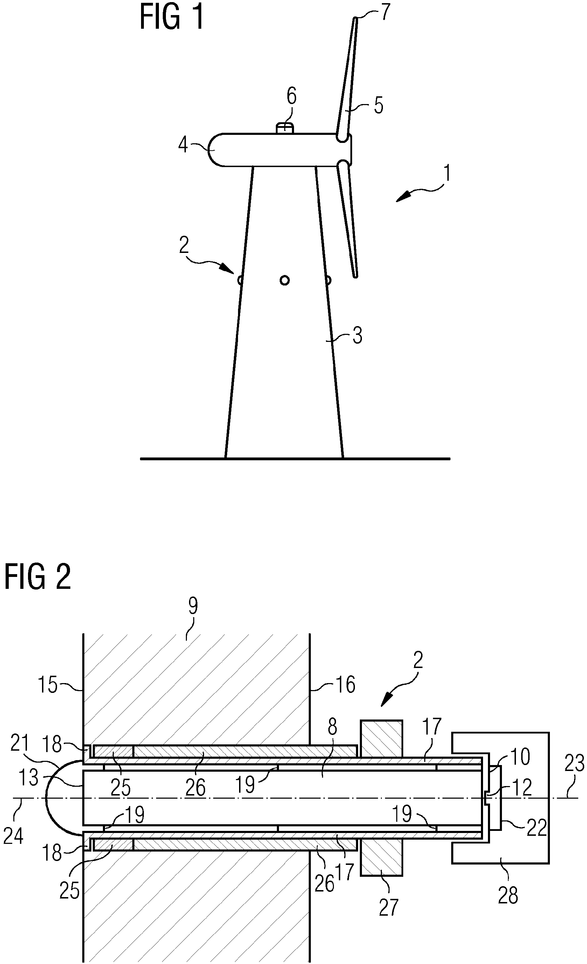

Figure 1 shows a schematic side view of a wind turbine 1 provided with a plurality of light guide assemblies 2. The wind turbine typically includes a tower 3, on which top a nacelle 4 is located containing a drive mechanism, such as a gear train or a direct drive, and the rotor blades 5. On top of the nacelle 4, a beacon light 6 may be installed, indicating the presence of a potentially dangerous construction to flight traffic. As the highest point of the wind turbine 1 is not the tower 3, but rather the blade tip 7 of one of the revolving blades 5, additional warning lights may be required to indicate the height which can be reached by the blade tips 7. As the warning lights are preferably not installed on the revolving blades 5, one or more tower lights 2 can be installed on the tower wall at a height corresponding to the lowest point a blade tip 7 can reach. Flight traffic can then estimate the height said blade tips 7 can reach in the opposite direction. Also, for relatively large towers, i.e. towers larger than a height specified by rules and/or regulations, it may be required to have tower lights 2.

Figure 2 shows a schematic cross-section of a first embodiment of a light guide assembly 2 that can be installed through a hole in a tower wall 9. The light guide assembly 2 comprises comprising a casing 17 arranged to extend substantially through a tower wall 9. The casing 17 may be tubular and can be configured to receive a light guide 8 therein. The light guide 8 is arranged to transmit light from a light source 12 at a first end 10 of the light guide assembly 2 towards a second end 13 of the light guide assembly 2 for emitting light to an area surrounding the tower 3. The light guide casing 17 is rigid and arranged for being inserted into a hole in the tower wall 9 such that, after insertion, the first end 10 is substantially at an inner side 16 of the tower wall 9 and the second end 13 is substantially at an outer side 15 of the tower wall 9. The light guide casing 17 can for example have a diameter of approximately 20 - 30 mm to fit in a hole in the tower wall 9. A length of the light guide casing 17 may be comprised in a range of for example 5 - 30 cm, or more or less depending on a tower wall thickness. One end of the light guide casing 17 is provided with a flange 18, preferably at the second end 13 of the light guide assembly 2 is provided. The light guide 8 may be centralized within the casing 17 and kept at a distance of the casing 17 with the help of one or more distance keepers19, here embodied as O-rings, known to the person skilled in the art. The casing 17 can be made of metal, for example of stainless steel. The second end 13 of the light guide assembly 2 may be provided with a transparent dome 21 covering the light guide 8 as a protection. The dome 21 may be transparent to a wide range of wavelengths, for example visible and/or infrared light or any other wavelength. Additionally, the dome 21 may be configured to filter and/or change the wavelengths of the light emitted to the surroundings of the tower 3, for example to filter and/or change the colour of the light. The light guide assembly 2 of the embodiment of Figure 2 further comprises a light source 12. The light source 12 preferably comprises at least one light emitting element, such as for example a light emitting diode or LED, preferably arranged on a printed circuit board 22, or any other carrier 22. The light source 12 may be a single light emitting element, such as a single LED, or a plurality of light emitting elements, such as a plurality of LEDs arranged for example in a row or an array or in any other pattern. The light source 12 may for example emit visible light and/or infrared light, according to, for example, regulations. The light source 12 may for example comprise a plurality of identical light emitting elements such as LEDs, for example all emitting light in approximately the same wavelength, or a mixture of light emitting elements emitting in different colours and/or in visible and/or infrared and/or UV light. The intensity of the emitted light may also be prescribed by official regulations. Also the colour of the emitted light may be regulated. The colour of the light emitted in the surroundings of the tower may be obtained for example by the light source 12 itself, by providing a coloured light source 12. The light source 12 is arranged to be mounted in or near a housing 28, such that, after insertion of the light guide casing 17 into or through the tower wall 16, the light source 12 is arranged at an inner side 16 of the tower wall 9.

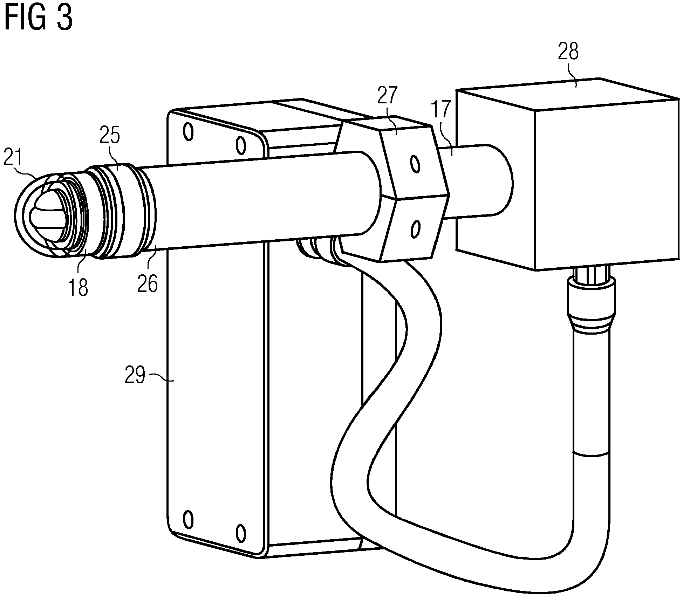

Figure 3 shows a perspective view on the embodiment of the light guide assembly 2 of Figure 2. Various aspects as discussed above for the embodiment of Figure 2 can also apply to this embodiment and vice versa. The light guide assembly 2 can further comprise a sealing ring 25 arranged to provide a sealing engagement between the hole in the tower wall 9 and the light guide casing 17, preferably between an inner surface of the hole in the tower wall 9 and an outer surface of the casing 17. The sealing ring 25 may be located near the second end 13 of the light guide assembly 2, preferably adjacent to the flange 18 of the casing 17. This sealing ring 25 can for example be made of rubber, such as silicone. The light guide assembly 2 can also include a compressing member 26 arranged to enclose the light guide casing 17 and to compress the sealing ring 25 from the inner side of the tower wall 9 towards an outer side. The compressing member 26 can be a relatively rigid sleeve or casing arranged to resist to and transmit compressive forces from the inside of the tower towards the sealing ring 25. By pushing against the compressing member 26 in a direction towards the second end 13 of the light guide casing 17, the sealing ring 25 is being compressed in the hole of the tower wall and expands in radial direction. This radial expansion of the sealing ring 25 allows for sealing and/or fixation of the light guide assembly 2 into the hole of the tower wall 9. For tightening of the compressing member 26, the light guide assembly 2 can comprise a tightening element 27 arranged to fixate the light guide 8 from the inner side of the tower wall 9. Said tightening element 27 can for example be a screw which can be screwed on an external screw thread on for instance the casing 17. Other tightening elements are possible as well. By mounting the tightening element 27 on the first end 10 of the light guide assembly 2, the tightening element pushes against the compressing element 26, which compresses the sealing ring 25, causing the sealing ring 25 to expand within the hole, such that the light guide casing 17 is fixated within the hole in the tower wall 9. Depending on the length of the light guide assembly and/or of the hole in the tower wall, also more than one sealing element can be used at different positions on the light guide assembly. For example a sealing element near the second end of the light guide casing and a sealing element near a first end of the light guide casing may be provided for relatively long light guides in relatively long holes in the tower wall, or at any other location.
The light guide assembly 2 further comprises a housing 28, preferably a box shaped housing, enclosing the light source 12. Said housing 28 is arranged to be mounted on the first end 10 of the light guide 8, preferably on the casing 17 surrounding the light guide 8, the first end 10 of the light guide casing 17 preferably extending into or up to the housing 28. A wall of the housing 28 through which the light guide casing 17 is arranged to extend, may be relatively thick, such as to provide support to the light guide 8 to improve stability and/or alignment. The light guide assembly 2 may also comprise a power supply 29 which is connectable to the light source 12. The power supply 29 may be a separate element and may be arranged to be placed at a distance of the light source 12, or may be integrated within the housing 28. The housing 28 may be arranged to receive connecting elements from the power supply, for example from a lower or an upper side of the housing 28, which allows a compact installation of the light guide assembly.

In order to install at least one light guide assembly into a tower, for example into a wind turbine tower, a hole needs to be provided in a tower wall 9. The light guide assembly 2 can then be inserted into said hole from an inner wall side 16 towards the outer wall. In order to know the exact position of the second end 13 of the light guide 8, the light guide 8, or preferably the casing 17, can for example be provided with a gauging. Once the desired position is reached, e.g. when the length indicated by the gauge corresponds to the length of the hole in the tower wall, the light guide casing can be fixated within the hole, by causing the sealing ring 25 to expand within the hole, for example by mounting the tightening element 27 on the first end 10 of the light guide 8 and by moving said tightening element 27 against a compressing element 26 transmitting the compression to the sealing ring 25. Alternatively and/or additionally, a stop element can be provided at the second end 13 of the light guide 8, for example at or near the flange 18 of the casing 17. In an embodiment, the flange 18 may be embodied at least partly resiliently, for example, the flange 18 may have a length extending radially outward with respect to the sealing element 25. A lower part of the flange may be sufficiently rigid to retain the sealing element and an outer end may be sufficiently resilient to be folded during insertion of the light guide assembly 2 into the hole of the tower wall, and to be erected when being pushed through until outside the hole. Then, the erected flange may function as a stop member that indicates when the light guide assembly is being pushed sufficiently far through the hole in the tower wall until the second end of the light guide casing is sufficiently far at or near the outside of the tower wall for directing light in the required light emitting pattern to the environment. Such erection of the resilient part of e.g. a flange can provide for a tactile feedback to the person installing the light guide assembly that a sufficient installation length has been reached. The resilient stop member may also be provided adjacent the flange and/or a spring biased member can be used. Of course alternative possibilities to indicate that the light guide assembly 2 is sufficiently far inserted into the hole of the tower wall may be provided.

Connection of the first end 10 of the light guide assembly 2 with a light source 12, and/or connecting said light source 12 with a power supply 29 can then be done on site, or, can be done before installation, substantially simplifying the relatively delicate alignment of the optics within the light guide assembly.

For the purpose of clarity and a concise description, features are described herein as part of the same or separate embodiments, however, it will be appreciated that the scope of the invention may include embodiments having combinations of all or some of the features described. It may be understood that the embodiments shown have the same or similar components, apart from where they are described as being different.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage. Many variants will be apparent to the person skilled in the art. All variants are understood to be comprised within the scope of the invention defined in the following claims.

## Claims

1. Light guide assembly for a tower, in particular for a wind turbine tower, comprising a light guide casing arranged to extend substantially through a tower wall, wherein a first end of the light guide casing is configured to receive a light source, and a second end of the light guide casing is configured for emitting light to an area surrounding the tower,
wherein, after insertion, the first end is substantially at an inner side of the tower wall and the second end is substantially at an outer side of the tower wall.

2. Light guide assembly according to claim 1, wherein one end of said casing is preferably provided with a retention member such as a flange.

3. Light guide assembly according to any of the preceding claims, wherein the second end of the light guide casing is provided with a transparent dome.

4. Light guide assembly according to any of the preceding claims, comprising a sealing ring arranged to provide a sealing engagement between the hole and the light guide casing.

5. Light guide assembly according to claim 4, comprising a compressing member arranged to enclose the light guide casing and to compress the sealing ring from the inner side of the tower wall.

6. Light guide assembly according to any of the preceding claims, comprising a tightening element arranged to fixate the light guide casing from the inner side of the tower wall.

7. Light guide assembly according to any of the preceding claims, comprising a light source, for example a light emitting element such as a light emitting diode, preferably arranged on a printed circuit board, wherein the light source is arranged to be mounted at the first end of the light guide casing.

8. Light guide assembly according to any of the preceding claims, comprising a housing, preferably a box shaped housing, enclosing the light source, wherein said housing is arranged to be mounted on the first end of the light guide, the first end of the light guide casing preferably extending into the housing.

9. Light guide assembly according to any of the preceding claims, comprising a power supply which is connectable to the light source.

10. Tower, in particular a wind turbine tower, provided with at least one light guide assembly according to any of the preceding claims.

11. Use of a light guide assembly according to any of the claims 1 - 9 for marking a wind turbine tower.

12. Method for providing a tower, in particular a wind turbine tower, with at least one light guide assembly, preferably a light guide assembly according to any of the claims 1 - 19, comprising the steps of:
- providing a hole in a tower wall;
- inserting a light guide casing into said hole from an inner wall side outwardly;
- fixating said light guide casing from the inner wall side;
- connecting a first end of the light guide casing with a housing enclosing a light source near the inner wall side;
- connecting the housing with a power supply.
